# FASCICULE DE BREVET EUROPEEN

(11) **EP 0 380 377 B1**
(45) Date de publication et mention de la délivrance du brevet: **12.10.1994**
(21) Numéro de dépôt: 90400015.5
(22) Date de dépôt: 03.01.1990
(51) Int. Cl.: G07F 7/08, G07B 15/00, G07F 7/00

(54) **Système de paiement électronique de transports et de services publics par cartes à microcircuit**
Elektronisches Chipkartenzahlungssystem für öffentliche Transport- oder Dienstleistungen
Electronic IC card payment system for public transport and services

(30) Priorité: 25.01.1989 FR 8900880
(43) Date de publication de la demande: 01.08.1990
(73) Titulaire: URBA 2000, F-59000 Lille (FR)
(72) Inventeur: Vié, Frédéric, F-59700 Marcq en Baroeul (FR)
(74) Mandataire: Dupuis-Latour, Dominique

(56) Documents cités:
- EP-A- 0 169 278
- WO-A-88/03295
- CH-A- 668 324
- GB-A- 2 065 353
- GB-A- 2 191 029

## Description

La présente invention concerne un système de paiement électronique de transports et de services publics par cartes à microcircuit, destiné à permettre le paiement d'une pluralité de transports et de services eux-même offerts par une pluralité de réseaux.

On connaît l'utilisation des cartes à microcircuits pour le paiement de certains services, par exemple le téléphone dans les cabines publiques.

Il a été également proposé d'utiliser des cartes à microcircuits pour le paiement des trajets effectués avec certains transports urbains, ces cartes étant des cartes postpayées mémorisant chaque voyage jusqu'à épuisement, de la même manière qu'un compteur de voyages.

Jusqu'à présent, les expériences d'application des cartes à microcircuits au paiement des transports se sont heurtées au fait que l'utilisation de telles cartes en «porte-jetons» ou «carnets de tickets» n'est possible que sur un seul réseau de transport bien déterminé (par exemple, les autobus d'une communauté urbaine bien déterminée).

Le GB-A-2 191 029 décrit par ailleurs un "billet électronique" susceptible de mémoriser non seulement des unités monétaires mais également des informations sur le transport effectué. Il s'agit donc à la fois d'un moyen de paiement et d'un titre de transport, mais qui est spécifique à une application donnée, donc sans caractère universel.

Cette limitation à un réseau unique empêche pratiquement l'utilisation d'un système de paiement électronique par cartes à microcircuits pour les transports dans les grandes agglomérations urbaines, où les voyages sont généralement effectués sur plusieurs réseaux différents, souvent imbriqués et interconnectés, et gérés chacun par un exploitant différent.

En outre, hormis le problème des réseaux multiples, les systèmes proposés jusqu'à présent apparaissent à plusieurs égards peu satisfaisants.

Tout d'abord, il est toujours nécessaire de prévoir la délivrance de billets, avec une multiplicité de supports papier compte tenu notamment des réductions tarifaires possibles, des zones de déplacement, de la classe choisie, etc. En outre, cette variété des titres de transport possibles empêche de rassembler sur un même titre de transport un « capital de déplacement » utilisable sur plusieurs réseaux et tenant compte aussi bien des règles tarifaires propres à chaque réseau et du « profil tarifaire » de l'usager, c'est-à-dire des différentes réductions auquel il pourra avoir droit, des suppléments éventuels, etc.

De plus, l'information contenue dans le titre de transport ne peut, parce que figée, être exploitée avec finesse et restituer avec exactitude les conditions réelles du déplacement. Par exemple, dans le cas de réseaux interconnectés pour lesquels, comme c'est le cas en région parisienne, l'usager peut verser un montant forfaitaire ne tenant compte ni du réseau utilisé (métro, bus, train) ni du nombre de voyages effectués sur chaque réseau, l'exploitant de chaque réseau ne reçoit pas nécessairement la contre-partie réelle des prestations qu'il fournit - en tous cas il n'est pas en mesure de le déterminer de façon suffisamment fine. Il en est de même si différentes collectivités locales ou territoriales participent chacune pour une part au financement d'un même réseau donné.

Par ailleurs, les systèmes de billetterie traditionnels (avec impression des billets, stockage, vente, distribution, etc.) sont toujours très lourds à gérer, et ce, d'autant plus qu'il existe une grande variété de titres de transport possibles et de tarifs particuliers dont peut se prévaloir l'usager.

D'autre part, si l'usager a décidé de se déplacer à l'intérieur d'un périmètre géographique englobant plusieurs réseaux, il ne sera pas toujours en mesure de connaître les droits aux tarifs réduits qui peuvent lui être consentis, ces droits étant souvent liés à de nombreux paramètres différents considérés selon des règles propres à chacun des réseaux. Cette méconnaissance risque de lui donner une idée falsifiée du coût de ses déplacements, qui l'incitera peut-être à utiliser - à tort - un autre mode de transport.

L'un des buts de la présente invention est de proposer un système qui pallie l'ensemble de ces difficultés et, en outre, apporte un certain nombre d'avantages entièrement nouveaux.

Plus précisément, l'un des buts de l'invention est de proposer un système de paiement électronique de transports et de services urbains par carte à microcircuit qui permette - avec une seule et même carte - le paiement d'une pluralité de transports et/ou services eux-même offerts par une pluralité de réseaux.

En d'autres termes, l'usager n'aura pas besoin d'acheter un titre de transport à chaque voyage (qu'il s'agisse d'un voyage simple ou d'un voyage distribué sur plusieurs réseaux).

A cet égard, le carte jouera à la fois le rôle de moyen de paiement et de titre de transport universel (c'est-à-dire non spécifique à un réseau donné) et réutilisable pour plusieurs transports successifs.

Selon un second aspect de l'invention, l'usager pourra également, avec cette même carte faisant office de moyen de paiement et de titre de transport combinés, régler, indépendamment de tout transport, un certain nombre de services mis à sa disposition, tels que (cette liste n'étant en aucune façon exhaustive) :
- téléphone public, par exemple dans les gares, salles d'attente, etc. ou dans les transports eux-mêmes (téléphones publics installés à bord des véhicules),
- stationnement payant, en stationnement de voirie (parcmètres collectifs ou individuels) ou bien en parkings fermés,
- péages d'autoroute ou d'ouvrages d'art,
- courses de taxis,
- services municipaux divers.

En d'autres termes, non seulement les cartes de l'invention permettront de gérer un contrat de transport, concrétisé par un titre de transport devant faire l'objet d'un paiement et d'une validation (validation correspondant actuellement, par exemple, au compostage d'un billet), mais encore permettront le règlement d'une multiplicité de services offerts indistinctement à l'usager.

L'une des caractéristiques essentielles de l'invention est la présence dans chaque carte de deux zones, à savoir une zone de mémorisation d'unités de compte ou unités monétaires (fonction « porte-monnaie » pour le règlement des transports et/ou des services) et d'une zone faisant fonction de titre de transport, destinée à se substituer à l'actuel billet de transport, et se prêtant à l'exécution des deux opérations essentielles de règlement et de validation (ces deux opérations devant pouvoir être distinguées dans le temps et dans l'espace) nécessaires à la gestion d'un contrat de transport, ainsi que la compensation éventuelle entre réseaux, mise en oeuvre au cas où le réseau auprès duquel est effectué le règlement d'un service ou d'un transport ne correspond pas au réseau de la zone d'identification de réseau de la carte utilisée pour ce règlement.

Une autre caractéristique essentielle de l'invention est le fait que, pour rendre le système universel et s'affranchir totalement de tout système manuel de billetterie, il offre la possibilité de disposer de deux types de cartes différentes, à savoir d'une part des cartes anonymes prépayées, rechargeables, et d'autre part des cartes nominatives, également rechargeables.

Les cartes anonymes seront alors destinées aux usagers occasionnels ou de passage et permettent la gestion simplifiée (c'est-à-dire sans tenir compte de réductions éventuelles, d'abonnements, etc.) et/ou le règlement direct du transport ou du service par la valeur prépayée chargée dans la carte ; ce dernier mode de règlement n'est cependant pas une obligation, car le prix d'un contrat de transport mémorisé dans l'une de ces cartes peut être payé non seulement par le porte-monnaie électronique de la carte mais encore par d'autres moyens de paiement extérieurs (espèces, chèques, cartes de paiement privatives ou bancaires, etc.).

En revanche, les cartes nominatives, destinées aux usagers habituels, permettront en outre à ceux-ci d'effecteur le règlement d'un transport ou d'un service par téléprélèvement bancaire de la même manière qu'avec une carte bancaire (les cartes nominatives conservant dans leur mémoire l'identité de l'usager, ses références bancaires ainsi qu'un code secret qui lui est propre) et permettront d'autre part de gérer un historique des différents voyages effectués afin, par exemple, d'accorder un certain nombre d'avantages tarifaires fonction du nombre ou de la périodicité de ces voyages, de contrôler que les trajets relatifs à un abonnement sont bien effectués de la manière prévue, etc.

Plus précisément, l'invention, qui est du type général exposé dans le préambule de la revendication 1 (correspondant au GB-A- 2 191 029) est caractérisée par les moyens spécifiés dans cette revendication 1.

De préférence, les cartes de chacun des deux ensembles de cartes comportent en outre une zone d'identification de réseau représentative de celui des réseaux qui a délivré la carte au porteur, qui a reçu de celui-ci les fonds correspondant au prépaiement des unités monétaires et qui est destinataire des fonds versés pour le rechargement éventuel de celles-ci, et les moyens de traitement comportent des moyens de compensation entre réseaux, mis en oeuvre au cas où le réseau auprès duquel est effectué le règlement d'un service ou d'un transport ne correspond pas au réseau de la zone d'identification de réseau de la carte utilisée pour ce règlement.

Les moyens de compensation entre réseaux sont également mis en oeuvre au cas où le réseau après duquel est effectué un rechargement de carte ne correspond pas au réseau de la zone d'identification de réseau de la carte ainsi rechargée.

Ceci permet de rendre l'existence et l'imbrication des réseaux entièrement transparente pour l'usager, celui-ci pouvant utiliser, grâce à une carte unique délivrée par l'un quelconque des réseaux, la totalité des services proposés par l'ensemble des autres réseaux, les questions de compensation financière entre réseaux étant gérées de façon entièrement automatique, sans intervention de sa part, grâce aux différentes informations contenues dans sa carte.

On notera que ce caractère universel vaut même pour les cartes anonymes, ce qui permet de faire bénéficier la totalité des usagers, même s'ils ne sont qu'occasionnels ou de passage, de cette transparence à l'égard des réseaux.

De préférence, les moyens de traitement permettent en outre, après règlement direct par l'usager, de recharger la zone de mémorisation d'unités monétaires d'au moins certaines des cartes anonymes.

C'est-à-dire que l'on rend rechargeable certaines des cartes anonymes ; on disposera alors, essentiellement, de deux catégories de cartes, à savoir :
- les cartes anonymes rechargeables,
- et les cartes nominatives, également rechargeables, ces cartes nominatives pouvant elles-mêmes être de capacités différentes selon qu'elles sont électriquement effaçables ou non.

Le système de l'invention peut éventuellement comprendre, en outre, un troisième ensemble de cartes, ces cartes étant des cartes anonymes prépayées comportant chacune une mémoire comprenant une zone de mémorisation d'une unité de transport ou service débitée lors de l'utilisation de ce transport ou de ce service et une zone de mémorisation d'un titre de transport correspondant, et des moyens processeurs incorporés, pour l'accès sélectif et la gestion des informations contenues dans cette mémoire.

On disposera alors, outre les deux catégories précitées de cartes, d'une troisième catégorie de cartes, à savoir des cartes anonymes non rechargeables, très peu coûteuses et destinées aux usagers de passage ou très occasionnels, et destinées éventuellement à remplacer le ticket unitaire, et correspondant donc au cas d'une carte à usage unique.

Grâce à de telles cartes à usage unique, on peut intégrer totalement l'ensemble de la billetterie dans le système électronique, même pour des voyages isolés et uniques.

On va maintenant donner une description détaillée, en référence aux dessins annexés, d'un exemple de mise en oeuvre de l'invention.

La figure 1 montre de façon schématique l'architecture du système multiréseau de l'invention.

La figure 2 est une schéma par blocs montrant la structure matérielle générale d'une carte anonyme.

La figure 3 montre le mappage de la mémoire d'une carte anonyme.

La figure 4 est un détail de la figure 3, montrant la structure détaillée de la zone renfermant la code système.

La figure 5 est un détail de la figure 3, montrant la structure détaillée d'une zone correspondant à un titre de transport.

La figure 6 est une variante de la figure 5, pour un titre de transport d'un autre réseau.

La figure 7 est un schéma par blocs montrant la structure matérielle générale d'une carte nominative.

La figure 8 montre le mappage de la mémoire d'une carte nominative.

On va maintenant décrire la structure et le fonctionnement du système selon l'invention.

Par « système » on entendra l'ensemble formé par une pluralité de « réseaux » interconnectés (au sens informatique du terme) entre eux, chaque « réseau » gérant un « service » (ou un ensemble homogène de services) donné ou bien un « transport » (ou un ensemble homogène de transports) donné.

Bien que l'application aux transports de voyageurs soit celle pour laquelle ait initialement été envisagée et développée la présente invention, cette application n'est cependant pas limitée à ce type de transports ni même aux seuls transports.

Donc, dans la suite de la description, le terme de « transport » ne devra pas être entendu *stricto sensu*, car on pourrait en effet transposer les enseignements de la présente invention à d'autres types de prestations gérées de façon comparable à un contrat de transport (c'est-à-dire avec paiement et validation dissociés, possibilités de remises, abonnements, traitements statistiques, etc.) en modifiant simplement la définition des différentes zones d'informations spécifiques à la gestion des titres de transport, l'architecture du système restant la même pour l'essentiel.

### Architecture générale du système

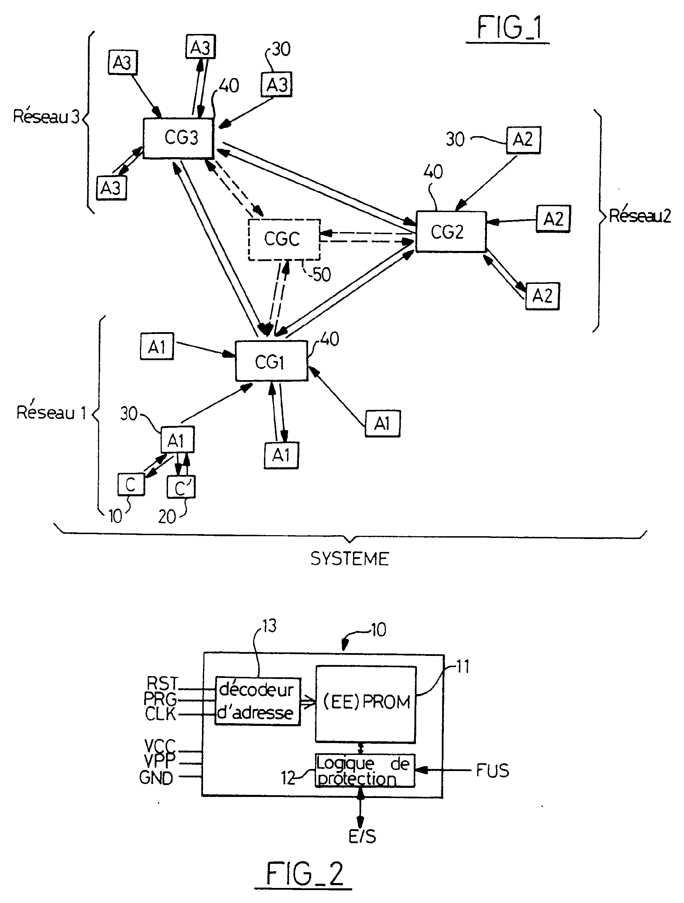

La figure 1 montre de façon schématique l'architecture du système selon l'invention.

L'ensemble des prestations offertes par les réseaux du système sont fournies à des usagers au moyen de cartes, généralement uniques pour chaque usager, et qui peuvent être soit des cartes anonymes C, désignées par la suite par la référence 10, soit des cartes nominatives, C′, désignées par la suite par la référence 20.

Pour l'exécution des différentes prestations ou transactions, les cartes 10 ou 20 sont insérées soit, à chaque transaction, à l'intérieur d'un lecteur de carte intégré dans un automate 30, soit, de façon permanente, dans un lecteur de carte portatif dialoguant à chaque transaction avec un automate 30 par des liaisons immatérielles ; les cartes 10 ou 20 vont échanger avec l'automate 30 des informations par l'intermédiaire des lecteurs de carte, à la fois en lecture (lecture de certaines données contenues dans le mémoire de la carte) et en écriture (mise à jour de données évolutives ou effaçables de cette mémoire). Le système prend donc en compte indifféremment ces deux modes d'exécution des transactions avec un automate 30.

Sur la figure 1, on a désigné par A1 les automates 30 du réseau 1, par A2 les automates 30 du réseau 2, etc.

Ces automates peuvent être de type très variés, parmi lesquels on peut citer (de façon non exhaustive) :
- terminaux de transaction électronique accessibles par l'intermédiaire d'un vendeur, permettant d'exécuter des fonctions telles que la personnalisation des cartes au moment de leur première délivrance, l'inscription de tarifs réduits propres à l'usager, le chargement ou le rechargement des unités monétaires, la vente du titre de transport, son compostage, etc.
- guichets ou caisses automatiques, permettant le rechargement en unités monétaires, la vente du titre de transporte, leur éventuelle validation périodique et/ou leur compostage,
- composteurs installés dans les gares ou stations, permettant d'authentifier l'utilisation effective du titre de transport après avoir vérifié la validité de celui-ci ainsi que les conditions d'accès (notamment en ajoutant à la zone mémoire correspondante du titre de transport de la carte les dates et heures de compostage). Les compostages peuvent être intégrés à une caisse automatique ou à un terminal de transaction électronique.
- terminaux vidéotex équipés de lecteurs de cartes à mémoire installés dans des espaces publics, chez des commerçants ou même chez les particuliers, permettant notamment de recharger la zone de mémorisation des unités monétaires par téléprélèvement bancaire ou de réaliser la vente du titre de transport,
- téléphones et radiotéléphones publics,
- lecteurs de cartes portatifs dialoguant avec l'un quelconque des automates précités par des relations immatérielles (infrarouge, ondes hertziennes, etc.) et dans lesquels sont insérés les cartes.

Les différents automates 30 d'un même système sont tous reliés à un centre de gestion du réseau 40, propre à l'exploitant du réseau.

Par ailleurs, les différents centres de gestion 40 sont reliés entre eux soit directement, soit indirectement via un centre de gestion centralisé 50 unique pour l'ensemble du système, illustré en tiretés sur la figure 1.

Comme on peut le voir sur la figure 1, pour certains automates la liaison au centre de gestion 40 dont il dépend est essentiellement unidirectionnelle (c'est par exemple le cas des composteurs), tandis que pour d'autres elle est bidirectionnelle (notamment pour les automates permettant de réaliser un paiement par téléprélèvement bancaire).

Les différents centres de gestion sont interconnectés entre eux afin de pouvoir échanger des informations statistiques et comptables à des fins de compensation : ainsi, si une carte initialement délivrée par le réseau 2 est utilisée dans un automate du réseau 1 pour effecteur un rechargement en contrepartie du versement d'une certaine somme au réseau 1, le réseau 1 devra créditer le réseau 2 de ce montant ; inversement, si une carte du réseau 2 est utilisée pour le règlement d'une prestation du réseau 1, le réseau 1 devra débiter le réseau 2 de la contre-valeur de cette prestation.

En effet, le système selon l'invention est basé sur le principe que le réseau qui a émis une carte donnée (que l'on appellera par la suite « réseau principal » ou « émetteur principal ») est propriétaire du support et responsable du capital électronique prépayé géré dans ce support et utilisé indifféremment dans tous les réseaux du système.

Pour ce faire, l'émetteur principal d'une carte donnée sera destinataire de tous les fonds issus du rechargement de la carte, quel que soit le lieu (c'est-à-dire le réseau) où aura été effectué ce rechargement.

En contrepartie, il remboursera aux autres réseaux du système les dépenses qui n'auront pas été effectuées dans son réseau.

Parmi ces autres réseaux, on distinguera ceux qui ont la qualité d'« émetteur secondaire » de ceux qui ne sont qu'« exploitant affilié » : les « émetteurs secondaires » gèrent d'une façon indépendante un certain nombre de fichiers qui leur sont propres et par convention avec le détenteur de la carte ; ces fichiers sont notamment le fichier de profil tarifaire (qui sera décrit plus loin) et éventuellement, selon que la carte est anonyme ou non, un fichier de titres de transport et/ou un fichier de comptage de consommations. Les « exploitants affiliés », en revanche, ne pourront que créer un fichier de titres de transport propres dans une carte nominative.

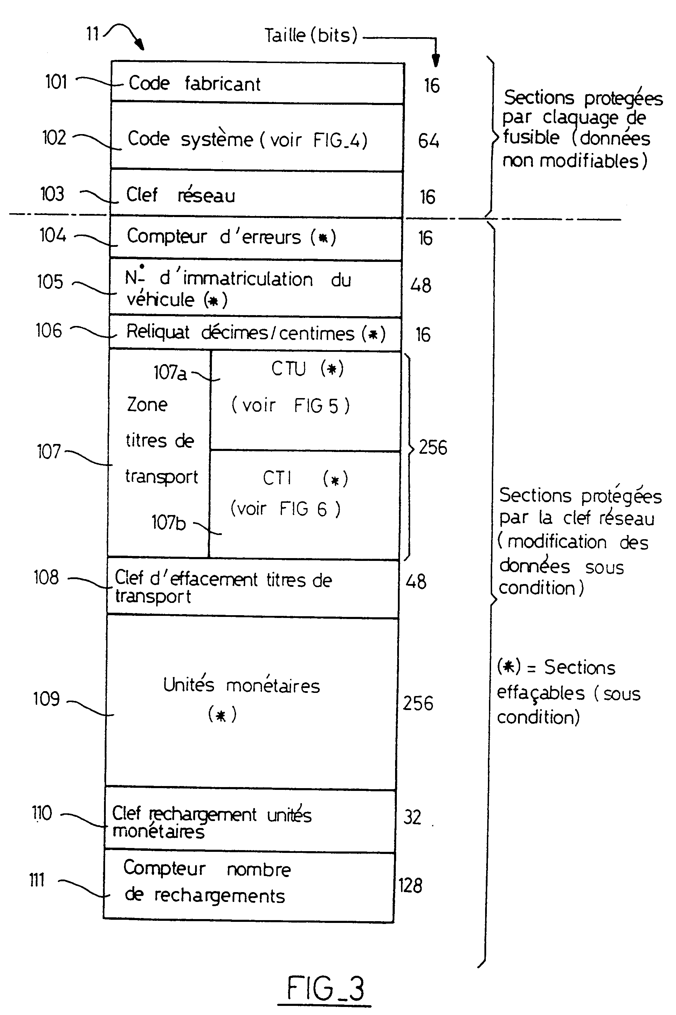

On verra, lorsque l'on décrira en détail la figure 4, que la mise en oeuvre de ce principe de compensation est rendue possible grâce aux informations identifiant l'émetteur principal d'une carte, ces informations étant élaborées suivant un codage spécifique et conservées en clair dans la mémoire.

### Structure matérielle des cartes anonymes

La figure 2 montre, de façon schématique, la structure d'une carte anonyme 10. Celle-ci comporte essentiellement une mémoire 11, effaçable (EEPROM) ou non (PROM ou EPROM) à laquelle on accède via une logique de protection 12 et un décodeur d'adresse 13.

La puce de la carte peut être soit, comme illustré sur la figure 2, en logique câblée (de préférence, à mémoire effaçable), soit en logique microprogrammée (essentiellement, lorsque la mémoire est une mémoire à organisation modulable destinée à être également utilisée à distance - notamment pour son rechargement ou la délivrance à distance d'un titre de transport - via les réseaux de télécommunications), les deux cartes étant fonctionnellement semblables dans les deux cas.

La mémoire de ces cartes anonymes à logique câblée est par exemple une mémoire de 896 bits de capacité en technologie CMOS avec un protocole de communication synchrone.

Les caractéristiques, tant physiques qu'électriques ainsi que les protocoles d'échange des informations sont conformes aux normes ou projets de normes ISO ou ISO/DIS 7810, 7813 et 7816.

Les différentes contacts RST (restauration) PRG (programmation), CLK (horloge), VCC (tension d'alimentation générale), VPP (tension de programmation), GND (masse), E/S (entrée/sortie) et FUS (grillage du fusible de protection) sont physiquement et fonctionnellement conformes à ces normes, auxquelles on se réfèrera pour des plus amples détails.

Cette puce est par exemple la puce GPM 896 de la famille *GPMxx* fabriquée et encartée par le société GEMPLUS CARD INTERNATIONAL.

### Mappage de la mémoire des cartes anonymes

La figure 3 montre le mappage détaillé de la mémoire 11 d'une telle carte anonyme.

Cette mémoire comprend une première série de sections 101 à 103 protégées, de façon en elle-même connue, par le claquage d'un fusible, c'est-à-dire des sections qu'il ne sera en aucune façon possible de modifier une fois la logique de protection 12 activée par grillage de ce fusible. Le fusible sera grillé dès que la personnalisation de la carte sera achevée par le réseau émetteur principal.

Le reste des sections 104 à 111 est constitué de sections protégées par une « clef de réseau » contenue (zone 103) dans la première partie de la mémoire, qui ne pourront être modifiées que de façon conditionnelle par présentation de cette « clef de réseau ».

On va maintenant décrire le contenu de chacune de ces sections 101 à 111, la taille de chacune étant indiquée sur la figure 3 en marge de la représentation de chaque section (les tailles mentionnées n'étant bien entendu données qu'à titre indicatif).

La section 101 est programmée par le fabricant de la carte, et contient un numéro de fabrication.

La section 102 est programmée par l'émetteur principal de la carte, qui y inscrira un « code système » spécifique de l'invention, propre au réseau, et qui permettra de suivre la carte tout au long des transactions qu'elle servira à effectuer. Cette section 102, essentielle pour la mise en oeuvre de l'invention, sera décrite plus bas en référence à la figure 4.

La section 103 contient la « clef de réseau » mentionnée plus haut, utilisée par le réseau ayant émis la carte pour personnaliser celle-ci.

Cette clef de réseau doit être présentée par l'émetteur principal de la carte afin d'accéder à la mémoire du circuit de la carte et d'en effectuer la personnalisation, par inscription du code système dans la section 102, avant le claquage du fusible protégeant irréversiblement les zones 101 à 103.

Programmée initialement par le fabricant, cette clef permet d'éviter les fraudes pouvant intervenir lors du transport des cartes entre le lieu de fabrication et le lieu où l'émetteur principal personnalisera la carte.

Enfin, cette clef utilisée pour la personnalisation initiale de la carte est utilisée ensuite pour protéger l'accès aux zones 104 à 111 permettant de gérer les différentes transactions effectuées au moyen de la carte.

La section 104 est une zone de comptage qui enregistre les mauvaises présentations de la clef de réseau, afin de bloquer la carte après un certain nombre de tentatives infructueuses (par exemple quatre tentatives).

La zone 105 est destinée à mémoriser un numéro de véhicule automobile, numéro qui pourra être utilisé lorsque la carte servira au paiement d'un stationnement payant, en voirie ou en parking fermé.

La zone 106 est destinée à enregistrer les reliquats de décimes ou de centimes lorsque le montant réglé pour une transaction donnée ne correspond pas à un nombre entier d'unités monétaires : par exemple, pour une transaction de 4,75 F, on invalidera 5 unités monétaires et on inscrira dans la zone 106 un reliquat de 2 décimes et 5 centimes, qui restera inscrit au crédit de l'usager.

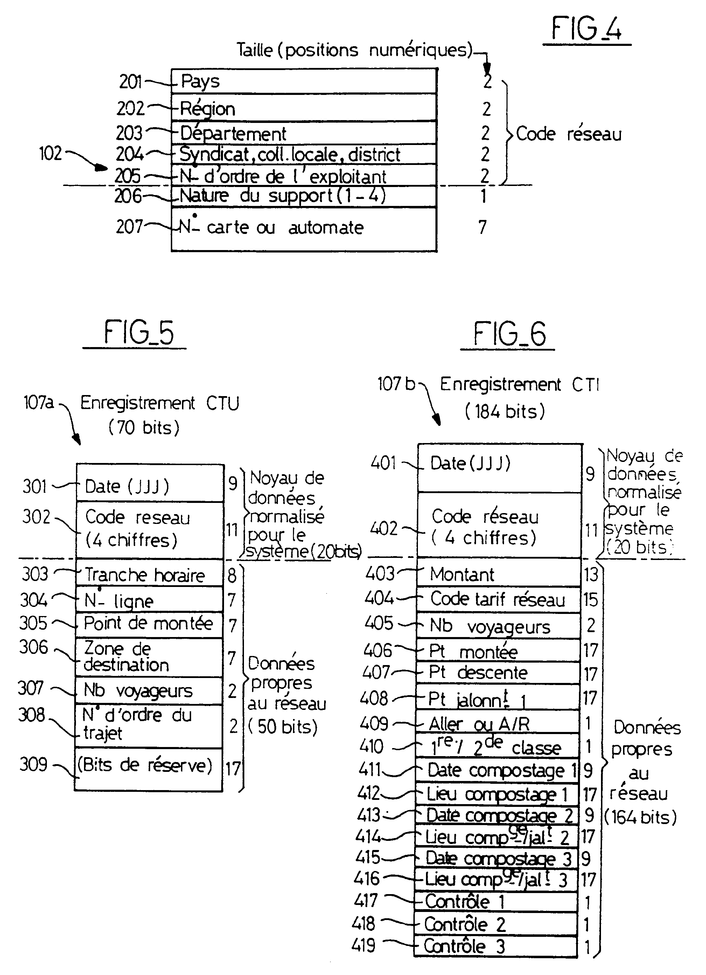

La zone 107 est une zone contenant au moins un titre de transport (de préférence, au moins deux), et dont on détaillera la structure plus bas en référence aux figures 5 et 6.

La zone 108 est une clef qui permet d'effacer et de mettre à jour la zone 107 des titres de transport.

La zone 109 est une zone mémorisant un certain nombre d'unités monétaires (par exemple, 250 unités monétaires de 1 F) et qui constitue le « porte-monnaie électronique » de la carte.

Cette zone pourra être rechargée au gré de l'usager et en fonction de ses besoins, en contrepartie du versement de la somme correspondante (ce versement pouvant être effectué à une caisse en espèces, par chèque ou par carte bancaire).

La zone 110 est une zone contenant une clef devant être présentée, au moment du rechargement, par le terminal effectuant cette opération afin de pouvoir effacer (c'est-à-dire recharger) la zone 109 mémorisant les unités monétaires.

Enfin, la zone 111 est un compteur du nombre de rechargements effectués, permettant de limiter à un nombre donné (par exemple, 128) le nombre de rechargement possible de la zone 109.

La mappe mémoire illustrée figure 3 correspond à une carte rechargeable, donc dans laquelle toutes les zones 104 à 111 sont effaçables, à l'exception des clefs des zones 108 et 110 et du compteur 111, qui ne doit pas pouvoir être remis à zéro.

On pourrait, également, envisager une carte très simplifiée, non rechargeable, dans laquelle on n'aurait donc ni les clefs des zones 108 et 110 ni le compteur de la zone 111 qui sont spécifiques aux cartes rechargeables. Cette carte simplifiée serait destinée à remplacer, comme indiqué plus haut, le ticket unitaire actuel.

Bien entendu, en fonction des cas particuliers, il est possible de prévoir des zones supplémentaires ou des zones en moins en fonction des besoins, la description correspondant à la figure 3 n'étant donnée qu'à titre d'exemple non limitatif.

La figure 4 montre la structure détaillée du contenu de la zone 102, qui correspond au « code système » caractéristique de l'invention.

Cette zone permet d'identifier de façon univoque chaque carte compte tenu de son émetteur principal correspondant (le réseau qui l'a délivré).

Cette zone contient les informations suivantes :
- Tout d'abord, un code réseau composé (par exemple) à partir des paramètres suivants (chacun étant, par exemple, codé sur deux positions numériques) : le pays (zone 201), la région administrative (zone 202), le département (zone 203), le syndicat, district ou collectivité locale de tutelle (zone 204), ainsi que le numéro d'ordre (zone 205) de l'exploitant pour une même série de valeurs 201 à 204 identiques.
   Certaines des positions numériques peuvent être mises à zéro si le paramètre concerné ne correspond pas à une autorité de tutelle effective.
   Ces différentes informations constituent le code représentatif du réseau, code qui sera utilisé de façon normalisée par la totalité des éléments du système.
- Un code (zone 206) indique ensuite la nature du support, par exemple un support de l'un des trois, voire quatre, types suivants :
   · carte anonyme rechargeable,
   · carte personnalisée,
   · automate : en effet, on peut utiliser, pour identifier les automates - notamment lorsqu'ils transmettent des informations à leur centre de gestion - le même mode de codage que celui utilisé pour la personnalisation des cartes, ce qui assure un degré supplémentaire de normalisation du système,
   · (éventuellement, carte anonyme non rechargeable).
- Enfin, une zone 207 contient le numéro d'identification propre à la carte ou l'automate en question.

Les figures 5 et 6 montrent des exemples de mappage d'une section 107a ou 107b correspondant à un titre de transport.

A la différence du code système décrit figure 4, la zone de mémorisation du titre de transport est propre à chaque réseau, et a donc une structure et une longueur utile qui peuvent varier d'un réseau à l'autre.

On mémorise dans la zone 107 au moins un titre de transport 107a d'un type désigné CTU (enregistrement de Contrôle de Transport Urbain), qui sera le titre de transport de ce type le plus récent, c'est-à-dire celui en cours d'utilisation (qui vient d'être composté) et/ou un titre de transport 107b d'un type désigné CTI (enregistrement de Contrôle de Transport Interurbain), qui sera le titre de transport de ce type le plus récent, c'est-à-dire celui en cours d'utilisation (qui vient d'être acheté et qui va être composté, ou qui vient d'être composté).

De préférence, le dimensionnement de la zone 107 est cependant choisi de manière à pouvoir toujours au moins mémoriser un titre de transport 107a et un titre de transport 107b, compte tenu de la plus grande dimension possible de ces titres de transport.

Lorsque la zone 107 mémorise une pluralité de titres de transport (un CTU 107a et un CTI 107b), ceux-ci sont gérés par type et par substitution de titre afin de ne conserver que le titre de transport le plus récent de chaque type.

La figure 5 montre un premier exemple d'enregistrement correspondant à un titre de transport de type CTU. Ce premier exemple peut notamment correspondre à un transport urbain (métro ou autobus).

Les tailles des différentes zones sont indiquées sur la figure 5, en marge de chacune des zones correspondantes ; ces tailles sont des valeurs avantageuses, mais non limitatives, correspondant à un schéma-type d'enregistrement de CTU.

Il est prévu deux séries de zones, à savoir :
- une première série de zones 301 et 302 formant un « noyau de données » normalisé pour tout le système, et dont la structure sera la même quel que soit le réseau ayant délivré le titre de transport, et
- une seconde série de zones 303 à 309 contenant des paramètres propres au réseau ayant émis le titre de transport.

Le noyau de données normalisé comporte :
- une zone 301 contenant la date (quantième du jour dans l'année),
- une zone 302 identifiant le réseau ; ce code réseau est différent du code système ; c'est un numéro original, compris entre 0 et 2048 et codé sur 11 bits, propre à chaque réseau.

Le bloc des données propres au réseau (zones 303 à 309) contient - par exemple - les données suivantes : tranche horaire (sur 8 bits), numéro de la ligne d'autobus ou de métro (sur 7 bits), point de montée (sur 7 bits), zone de destination (correspondant au point de descente, sur 7 bits), nombre de voyageurs concernés par le voyage (4 personnes maximum, sur 2 bits) et numéro d'ordre du trajet dans l'hypothèse où l'usager effectuerait le même jour plusieurs trajets complémentaires d'un même voyage et nécessitant un changement de mode de transport et un recompostage du titre.

La figure 6 montre un exemple de titre de transport de type CTI, notamment applicable au cas d'un transport ferroviaire.

La première partie de cet enregistrement (zones 401 et 402) est semblable à la partie homologue de l'enregistrement de la figure 5 (zones 301 et 302), puisqu'il s'agit du noyau de données normalisé pour le système, dont la structure est indépendante du réseau mais est commune aux deux types d'enregistrement.

La second partie de cet enregistrement contient, dans les zones 403 à 419, des paramètres propres au réseau ayant émis le titre de transport, notamment un titre de transport ferroviaire.

Le bloc de données propre au réseau contient - par exemple - les données suivantes :
- zone 403 : montant, sur 13 bits ;
- zone 404 : code tarif du réseau, sur 15 bits ;
- zone 405 : nombre de voyageurs concernés par ce titre de transport (cas des billets collectifs), 2 bits ;
- zone 406 : point de montée, sur 17 bits ;
- zone 407 : point de descente, sur 17 bits ;
- zone 408 : point de jalonnement n° 1 (cas des trajets pouvant, pour un point de montée et un point de descente donnés, emprunter plusieurs itinéraires : on doit alors préciser que le titre de transport vaut pour un trajet « ... de A à B via X » ; X est alors appelé « point de jalonnement »), sur 17 bits ;
- zone 409 : titre aller simple ou aller/retour, sur 1 bit ;
- zone 410 : classe (1re ou 2de), sur 1 bit ;
- zone 411 : date de compostage n° 1, sur 9 bits ;
- zone 412 : lieu de compostage n° 1, sur 17 bits ;
- zone 413 : date de compostage n° 2 (cas d'un transport effectué en plusieurs fois, avec recompostage obligatoire, comme par exemple dans le cas d'un aller-retour), sur 9 bits ;
- zone 414 : lieu de compostage n° 2 ou point de jalonnement n° 2 (cas d'un trajet « de A à B via X et Y » : il faut alors indiquer deux points de jalonnement), sur 17 bits.
   Pour indiquer si cette zone correspond à un lieu de compostage ou à un point de jalonnement on mettra la zone 413 (zone « date de compostage ») à '000' si la zone 414 contient un point de jalonnement, tandis qu'on lui donnera la valeur du quantième correspondant (valeur comprise entre '001' et '366') si la zone 414 contient un lieu de compostage.
- zone 415 : date de compostage n° 3, sur 9 bits ;
- zone 416 : lieu de compostage n° 3 ou point de jalonnement n° 3, sur 17 bits.
   Pour indiquer si cette zone correspond à un lieu de compostage ou à un point de jalonnement, on procédera de la même manière que pour la zone 414.
- zone 417 : contrôle n° 1 (par exemple pour valider le titre de transport lors d'un contrôle effectué pendant le trajet par un agent du réseau), sur 1 bit ;
- zone 418 : contrôle n° 2, sur 1 bit ;
- zone 419 : contrôle n° 3, sur 1 bit.

On voit que, grâce à cette structure, un enregistrement de type CTI d'une carte anonyme permettra de gérer indifféremment :
- soit 1 jalonnement + 3 compostages + 3 contrôles,
- soit 2 jalonnements +2 compostages +3 contrôles,
- soit 3 jalonnements + 1 compostage + 3 contrôles,

ce qui permettra de faire face à la quasi-totalité des situations que l'on peut rencontrer en pratique, malgré la complexité des itinéraires et des modes d'utilisation possibles pour le titre de transport.

### Structure matérielle des cartes nominatives

On va maintenant décrire la structure des cartes nominatives.

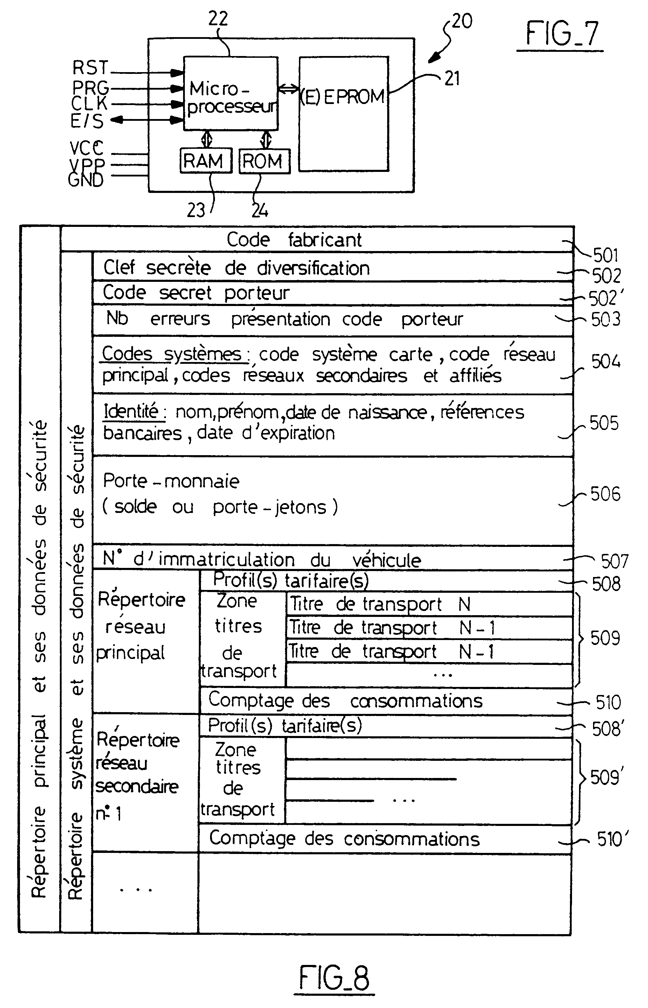

La figure 7 montre, sous forme simplifiée, la structure physique des circuits d'une telle carte 20, qui est organisée autour d'une mémoire de stockage de données de type EPROM ou EEPROM 21 à laquelle on accède par l'intermédiaire d'un microprocesseur 22 coopérant avec une mémoire vive RAM 23 (pour les données de travail) et une mémoire morte ROM 24 (pour le stockage du microprogramme).

En ce qui concerne ses caractéristiques physiques, électriques et son protocole (asynchrone) d'échanges d'informations, cette carte nominative 20 est conforme aux mêmes normes ou projets de norme ISO ou ISO/DIS que les cartes nominatives 10, et que l'on a mentionné plus haut.

Ces cartes sont par exemple des cartes de type SCHLUMBERGER, dotées en particulier de composants de type M16E (puce OKI) à masquage E3 (masquage dit « multiprestataires », corespondant ici à un système « multiémetteurs »), qui permet de faire cohabiter sur la même carte plusieurs applications indépendantes, ou encore de type GEMPLUS CARD INTERNATIONAL dotées de composants de la famille TS (puce SGS-THOMSON 16 Kbits EEPROM) à masquage MCOS, ou enfin de type BULL CP8 ou TRT-TI (PHILIPS) dotées de composants de la famille SPOM (SPOM 21, avec puce MOTOROLA 24 Kbits EEPROM) à masquage TB100, tous ces types de cartes bénéficiant des mêmes fonctionnalités d'utilisation multiservices/multiprestataires.

Typiquement, le composant mémoire est soit une EPROM (non effaçable) de 64 Kbits au moins, soit une EEPROM, effaçable, de 16 Kbits ou 24 Kbits. La compatibilité entre ces deux types de composants mémoires dotés du même système d'exploitation doit être une compatibilité ascendante.

La communication est assurée par un protocole asynchrone série bidirectionnel normalisé.

Très avantageusement, le système d'exploitation du microcircuit permet une gestion de fichiers hiérarchisée et arborescente permettant de constituer et de gérer des fichiers de données organisés en répertoires et sous-répertoires, chaque niveau hiérarchique possédant ses propres règles d'accès au fichier du sous-répertoire qu'il contrôle.

Ainsi, on empêche toute interaction des applications entre elles, chaque application ayant un accès libre à ses propres fichiers de données et ignorant les fichiers de données des autres applications.

De plus, l'allocation de l'espace mémoire peut être réalisé dynamiquement, au fur et à mesure des besoins de l'application, par création de répertoires ou fichiers, ce qui évite toute partition préalable, rigide, de la mémoire de données.

### Mappage de la mémoire des cartes nominatives

La figure 8 donne un exemple d'un tel mappage hiérarchisé de la mémoire 21 sur une carte nominative dotée d'une mémoire EEPROM.

Cette figure correspond à l'application du système de la présente invention à une carte nominative effaçable, par exemple de type EEPROM 64 Kbits ou 24 Kbits.

Ces cartes possèdent plusieurs fichiers de titres de transport. Il existe un fichier de titres de transport par émetteur de carte, qu'il soit émetteur principal ou émetteur secondaire, et par exploitant affilié au système dont le détenteur de la carte utilise le réseau. Donc, dans ce cas, chaque enregistrement de titre de transport peut être identifié par sa date, sans qu'il soit nécessaire d'y ajouter le code réseau original (4 positions numériques), qui est commun à tous les enregistrements du même fichier, de même type que celui des CTU ou CTI des cartes anonymes effaçables.

Le répertoire principal comporte un fichier 501 contenant un code fabricant, de même nature que le code fabricant contenu dans la zone 101 d'une carte anonyme (voir description de cette information à propos de la figure 3).

Le répertoire principal, à l'issue de la fabrication de la carte, contient un code secret de fabrication diversifié par carte ; ce code secret sécurise la carte pendant son transport de la chaîne de fabrication jusqu'à l'outil de prépersonnalisation système de l'émetteur principal de la carte.

Le code secret de fabrication de la carte est généré à partir d'une clef DES de 64 bits, et il est diversifié à partir du numéro de série de fabrication de la carte présentée ; ce numéro à huit positions numériques se décompose comme suit :
- première position : indique la nature technologique de la carte ('1' = 64 Kbits EPROM, '5' = 16 Kbits EEPROM, '4' = 1 Kbit EEPROM),
- sept positions suivantes : numéro de série historique de la carte fabriquée.

Ce numéro est mémorisé dans le fichier de fabrication 501, qui est d'accès libre en lecture. L'industriel qui fabriquera des cartes nominatives enverra une carte « lot » contenant de façon secrète sa clef de fabrication permettant de recalculer les codes secrets de fabrication des différentes cartes livrées au moment de leur prépersonnalisation système. Le code secret de fabrication diversifié qui sera recalculé permet de créer notamment le répertoire système de la carte, ce dernier répertoire contenant un code secret d'émetteur système, diversifié par carte, et/ou une clef d'émetteur système diversifiée (« clef de session ») qui permettent, en clair ou de façon cryptée, de présenter ledit code secret d'émetteur système permettant lui-même la création des sous-répertoires et fichiers de la care nominative.

Selon les systèmes d'exploitation propres aux différents types de cartes cités plus haut, les codes secrets et clefs secrètes de diversification sont soit associés au répertoire et mémorisés dans son entête, soit intégrés dans un bloc de sécurité et/ou un fichier de clefs secrètes, chacune de ces dernières pouvant être associée à l'un des fichiers ou répertoires, comme le prévoit le système.

En résumé, dans le cadre de la présente description il faut distinguer les codes secrets à valeur diversifiée par carte, qui pourront être présentés par les automates à la carte soit en clair après un simple calcul de la valeur diversifiée du code secret de la carte par la carte sécuritaire de l'automate, soit de façon cryptée par la carte sécuritaire de l'automate, la carte pouvant elle-même décrypter la valeur présentée par l'automate.

Le répertoire système ainsi créé comprend un certain nombre de fichiers contenant les zones 502 à 510.

On va tout d'abord décrire le contenu des zones 502 à 510.

On trouve notamment un fichier 502 contenant une clef secrète de diversification ou « clef de session » permettant la présentation cryptée de codes secrets, un fichier 502′ contenant une « clef porteur » ou « code secret porteur » qui permet de vérifier le code confidentiel du détenteur de la carte ; cette « clef porteur » est un code secret diversifié par carte associé à un code confidentiel personnel, propre à l'usager, qui constitue l'un des éléments essentiels qui permettent de distinguer une carte nominative, attachée à un porteur donné, d'une carte anonyme.

Il est prévu en outre une zone 503 qui permet de comptabiliser le nombre d'erreurs de présentation de ce code porteur, afin d'invalider la carte après un certain nombre de présentations erronées du code (par exemple, trois erreurs).

La zone 504 contient les codes systèmes, à savoir le code système de la carte (cf. les zones 206 et 207 de la figure 4) et les codes des différents réseaux (cf. les zones 201 à 205 de la figure 4) : réseau principal, réseaux secondaires et réseaux affiliés.

La zone 505, également typique des cartes nominatives, donne les renseignements permettant d'identifier le titulaire de la carte : nom, prénom, date de naissance, coordonnées bancaires et date d'expiration de la carte.

La zone 506 est une zone contenant le « porte-monnaie électronique » prépayé de la carte, qui pourra être utilisé pour le règlement des prestations de faible montant soit, dans le cas des cartes nominatives effaçables, à l'aide d'une zone « porte-monnaie » gérant en permanence le solde de ce dernier en clair mais avec toutes les sécurités associées nécessaires, soit, dans le cas des cartes nominatives non effaçables, à la manière d'une zone « porte-jetons » disposant de jetons de valeurs différentes consommés de la façon la plus économe possible, selon un algorithme en lui-même connu.

Ces deux modalités de gestion du porte-monnaie électronique prépayé de la carte nominative, selon que cette dernière est effaçable ou non, sont différentes des modalités de gestion du porte-monnaie électronique prépayé de la carte anonyme rechargeable, qui utilise à cette même fin une zone de stockage d'unités monétaires et une zone de reliquat pour la gestion des arrondis monétaires (cf. les zones 106 et 109 de la figure 3).

La zone 507 est destinée à conserver éventuellement un numéro d'immatriculation de véhicule (cf. la zone 105 de la figure 3).

On va maintenant décrire les sous-répertoires ou fichiers correspondant à chacun des réseaux utilisés, à savoir un réseau principal (celui qui a émis la carte) et généralement un ou plusieurs réseaux secondaires, voire même un ou plusieurs réseaux affiliés.

Chacun de ces fichiers est créé et organisé de façon identique, avec tout d'abord une zone 508, 508′ mémorisant un « profil tarifaire » propre au réseau et à l'usager, où sont conservés, par exemple dans le cas du transport ferroviaire (sur 16 octets) :
- un numéro d'ordre du profil (il peut y avoir plusieurs profils possibles, qui sont alors classés par ordre de priorité) ;
- le code tarif du réseau ;
- le nombre de voyageurs concernés par le tarif ;
- la classe concernée ;
- les limites géographiques du tarif (point de montée, point de descente) ;
- les limites temporelles du tarif (date de début de validité, date de fin de validité) ; et
- le montant payé pour l'accès à ce tarif.

On mémorise ensuite pour chaque réseau un historique des titres de transport dans des fichiers différents 509, 509′, ... propres à chaque réseau. Les enregistrements des cartes effaçables seront structurellement similaires aux enregistrements des cartes non effaçables.

A la différence des cartes anonymes (effaçables), les cartes nominatives mémorisent non seulement des enregistrements de type CTU/CTI, modifiés par ailleurs compte tenu de la carte, mais aussi des enregistrements de titre de transport permanent, que l'on appellera enregistrements de type CTIS (CTI Spécial), correspondant par exemple à des abonnements, ou des enregistrements complémentaires d'un titre de transport de type CTI ou CTIS, que l'on appellera CRSR (« Contrôle, Réservation, Supplément et Repas ») prenant en compte des services complémentaires et connexes au transport tels que réservations couchettes, suppléments, repas, etc. Ces derniers enregistrements pourront être chaînés à des enregistrements de titre de transport de type CTI ou CTIS.

La taille des enregistrements courts de type CTU sera par exemple de 64 bits, la taille des enregistrements longs de type CTI, CTIS ou CRSR sera par exemple de 64 bits, la taille des enregistrements longs de type CTI, CTIS ou CTR sera par exemple de 224 bits.

Le chaînage entre les enregistrements longs ou courts sera possible ; en effet, chacun des enregistrements précités dispose de deux bits de chaînage utilisables selon les modalités suivantes :
- '00' :: enregistrement isolé (sans rien derrière ni devant, du point de vue logique),
- '11' :: enregistrement chaîné logiquement avec l'enregistrement suivant,
- '01' :: enregistrement chaîné logiquement avec l'enregistrement précédent, mais n'ayant pas de suivant,
- '10' :: enregistrement chaîne logiquement avec les enregistrements précédent et suivant.

Dans les cartes nominatives effaçables, si l'on ne mémorise qu'un historique limité des titres de transport par fichier, par exemple 8 CTI, CTIS ou CRSR pour un fichier de titres de transport d'un transporteur interurbain (du type transporteur ferroviaire) et 3 CTU pour un fichier de titres de transport d'un transporteur urbain, on pourra gérer simultanément pas moins de 10 fichiers de titres de transport de 10 réseaux différents, par exemple un fichier de titres de transport de l'émetteur principal de la carte, lui-même transporteur interurbain gérant des titres de transport de type CTI, plus 5 fichiers de titres de transport d'émetteurs secondaires de la carte gérant des titres de transport de type CTU, plus enfin 4 fichiers de titres de transport d'exploitrant affilié gérant des titres de transport de type CTU.

L'historique des fichiers des titres de transport pourra être synthétisé par des paramètres mémorisés dans des fichiers de comptage des consommations réseau par réseau (zones 510, 510′, ...), qui permettent de gérer les consommations des usagers dans un réseau affilié, avec par exemple les paramètres suivants :
- chiffre d'affaires par période ;
- chiffre d'affaires de l'historique ;
- nombre de trajets par période ;
- nombre de trajets de l'historique ;
- etc.

Ces paramètres permettront de gérer des remises à la consommation de façon périodique et historique.

Il existe plusieurs fichiers de comptage des consommations, à la disposition de chacun des émetteurs de la carte (principal ou secondaires) (zones 510, 510′, ...).

On prévoira dans le système une mise à jour et une purge automatiques de l'historique des titres de transport d'un même réseau ; cette opération pourra être par exemple déclenchée automatique ment, mais préservera les titres de transport non consommés, par exemple les titres de transport non compostés.

Dans le cas d'une carte effaçable de 16 Kbits de capacité, on pourra ainsi mémoriser simultanément, tous réseaux confondus, pas moins de 35 titres de transport, par exemple 8 titres de transport CTI, chaînés ou non, et 27 titres de transport CTU d'un type comparable à ceux décrits à propos des figures 5 et 6. Bien entendu, cette carte étant effaçable, il n'existe plus de limite théorique de capacité de gestion, l'ensemble des titres de transport mémorisés étant, selon certaines modalités et conditions de sécurité, logiquement et physiquement effaçables.

Dans le cas d'une carte non effaçable de 64 Kbits de capacité, on pourra mémoriser, tous réseaux confondus et pour un nombre de fichiers comparable, de l'ordre de 1300 titres de transport CTU ou 225 titres de transport CTI, d'un type comparable à ceux décrits précédemment.

## Revendications

1. Un système de paiement électronique de transports et de services publics par cartes à microcircuit, du type comportant :
- un premier ensemble de cartes (20), ces cartes étant des cartes nominatives comportant chacune :
· une mémoire (21) comprenant :
◇ d'une part, une zone (505) d'identification personnelle et bancaire du titulaire de la carte, et
◇ d'autre part, une zone (506) de mémorisation d'unités monétaires susceptibles d'être débitées successivement à chaque règlement direct d'un transport ou d'un service et une zone (509, 509') de mémorisation d'au moins un titre de transport, invalidé à l'utilisation du transport correspondant, et
· des moyens processeurs (22) incorporés, pour l'accès sélectif et la gestion des informations contenues dans cette mémoire, et éventuellement,
- un second ensemble de cartes (10), ces cartes étant des cartes anonymes prépayées comportant chacune:
· une mémoire (11) comprenant une zone (109) de mémorisation d'unités monétaires susceptibles d'être débitées successivement à chaque règlement direct d'un transport ou d'un service et une zone (107) de mémorisation d'au moins un titre de transport, invalidé à l'utilisation du transport correspondant, et
· des moyens processeurs (12, 13) incorporés, pour l'accès sélectif et la gestion des informations contenues dans cette mémoire, et
- un ensemble d'automates (30) lecteurs de cartes, associés à chaque moyen de transport ou service,
système caractérisé en ce qu'il permette le paiement par une même carte, d'une pluralité de transports et de services eux-mêmes offerts par une pluralité de réseaux, et en ce qu'il comporte en outre :
- des moyens de traitement (40, 50), reliés au moins à un sous-ensemble de l'ensemble des automates, permettant, par télé**-**prélèvement bancaire et en fonction du contenu des zones d'identification personnelle et bancaire d'une carte nominative d'opérer le règlement d'un transport ou d'un service sans débit des unités monétaires mémorisées dans cette carte nominative, et de recharger la zone de mémorisation d'unités monétaires et/ou de restaurer la zone de mémorisation de titres de transport de cette carte nominative.

2. Le système de paiement électronique de la revendication 1, dans lequel
- les cartes de chacun des deux ensembles de cartes comportent en outre une zone (102 ; 504) d'identification de réseau représentative de celui des réseaux qui a délivré la carte au porteur, qui a reçu de celui-ci les fonds correspondant au prépaie-ment des unités monétaires et qui est destinataire des fonds versés pour le rechargement éventuel de celles-ci, et
- les moyens de traitement comportent des moyens de compensation entre réseaux, mis en oeuvre au cas où le réseau auprès duquel est effectué le règlement d'un service ou d'un transport ne correspond pas au réseau de la zone d'identification de réseau de la carte utilisée pour ce règlement.

3. Le système de paiement électronique de la revendication 2, dans lequel les moyens de compensation entre réseaux sont également mis en oeuvre au cas où le réseau auprès duquel est effectué un rechargement de carte ne correspond pas au réseau de la zone d'identification de réseau de la carte ainsi rechargée.

4. Le système de paiement électronique de la revendication 1, dans lequel la mémoire des cartes nominatives comporte en outre au moins une zone (508, 508′) d'identification tarifaire du titulaire de la carte, permettant de différencier le montant d'un transport ou d'un service à régler.

5. Le système de paiement électronique de la revendication 1, dans lequel les moyens de traitement permettent la détermination d'une remise tarifaire fonction de l'historique (510, 510′), mémorisé dans la carte, des transports ou services réglés par un usager donné au moyen d'une carte nominative.

6. Le système de paiement électronique de la revendication 1, dans lequel les moyens de traitement permettent, après règlement direct par l'usager, de recharger la zone de mémorisation d'unités monétaires d'au moins certaines des cartes anonymes.

7. Le système de paiement électronique de la revendication 1, comprenant en outre :
- un troisième ensemble de cartes (10), ces cartes étant des cartes anonymes prépayées comportant chacune :
· une mémoire (11) comprenant une zone (109) de mémorisation d'une unité de transport ou service débitée lors de l'utilisation de ce transport ou de ce service et une zone (107) de mémorisation d'un titre de transport correspondant, et
· des moyens processeurs (12, 13) incorporés, pour l'accès sélectif et la gestion des informations contenues dans cette mémoire.

## Patentansprüche

1. Elektronisches Zahlungssystem zur Bezahlung von öffentlichen Beförderungen und Dienstleistungen durch Mikroschaltungskarten, des Typs, der aufweist:
- einen ersten Kartensatz (20), wobei diese Karten auf den Namen lautende Karten sind und jeweils umfassen:
· einen Speicher (21), der aufweist:
* einerseits eine Zone (505) zur persönlichen und bankmäßigen Identifizierung des Inhabers der Karte, und
* andererseits eine Zone (506) zum Speichern der Währungseinheiten, sowie, eventuell,
- einen zweiten Kartensatz (10), wobei diese Karten vorausbezahlte namenlose Karten sind und jeweils umfassen:
· einen Speicher (11), der eine Zone (109) zum Speichern der Währungseinheiten, die nacheinander bei jeder direkten Bezahlung einer Beförderung oder einer Dienstleistung abzubuchen sind, sowie eine Zone (107) zum Abspeichern mindestens eines Beförderungsausweises, der bei Inanspruchnahme der entsprechenden Beförderung ungültig gemacht wird, und
· eingebaute Prozessoreinrichtungen (12, 13) für den selektiven Zugriff und die Verwaltung der in diesem Speicher enthaltenen Informationen, und
- eine Gesamtheit von Kartenleseautomaten (30), die jeder Beförderungs- oder Dienstleistungseinrichtung zugeordnet sind,
wobei das System dadurch gekennzeichnet ist, daß es die Zahlung einer Vielzahl von Beförderungen und Dienstleistungen, die ihrerseits durch eine Vielzahl von Netzen angeboten werden, durch ein und dieselbe Karte ermöglicht, und daß es weiter aufweist:
- Verarbeitungseinrichtungen (40, 50), die mindestens mit einer Teilgesamtheit der Gesamtheit der Automaten verbunden sind und es ermöglichen, durch bankseitige Fernabhebung und gemäß dem Inhalt der persönlichen und bankmäßigen Identifikation einer auf den Namen lautenden Karte die Bezahlung einer Beförderung oder einer Dienstleistung, ohne Abbuchung, der in dieser nominalen Karte gespeicherten Währungseinheiten, zu bewirken und die Zone zur Speicherung der Währungseinheiten nachzuladen und/oder die Zone zur Speicherung der Beförderungsausweise dieser nominalen Karte auf null zu stellen.

2. Elektronisches Zahlungssystem nach Anspruch 1, bei dem
- die Karten jeder der beiden Kartensätze weiter eine Netzidentifikationszone (102; 504) aufweist, die dasjenige der Netze darstellt, das die Karte dem Träger ausgestellt hat; das von diesem die der Vorauszahlung der Währungseinheiten entsprechenden Beträge erhalten hat, und das der Empfänger der bezahlten Beträge zur evtl. Nachladung desselben ist; und
- Verarbeitungseinrichtungen mit Einrichtungen zur Schaffung eines Ausgleichs zwischen Netzen aufweist, die in dem Falle in Betrieb gesetzt werden, daß das Netz, bei dem die Bezahlung einer Dienstleistung oder einer Beförderung durchgeführt wird, nicht dem Netz der Netzidentifikationszone der Karte entspricht, die für die Bezahlung benutzt wird.

3. Elektronisches Zahlungssystem nach Anspruch 2, bei dem die Einrichtungen zur Schaffung des Ausgleichs zwischen Netzen auch in dem Falle in Betrieb gesetzt werden, daß das Netz, bei dem eine Nachladung der Karte durchgeführt wird, nicht dem Netz der Netzidentifikationszone der so nachgeladenen Karte entspricht.

4. Elektronisches Zahlungssystem nach Anspruch 1, bei dem der Speicher der auf den Namen lautenden Karten weiter mindestens eine Tarifidentifikationszone (508, 508') des Inhabers der Karte aufweist, die es ermöglicht, den zu bezahlenden Betrag einer Beförderung oder einer Dienstleistung zu unterscheiden.

5. Elektronisches Zahlungssystem nach Anspruch 4, bei dem die Verarbeitungseinrichtungen die Festsetzung eines tariflichen Nachlasses, nach Maßgabe der aufgetretenen in der Karte gespeicherten Umstände (510, 510'), für Beförderungen oder Dienstleistungen ermöglichen, die von einem gegebenen Benutzer mit Hilfe einer auf den Namen lautenden Karte bezahlt werden.

6. Elektronisches Zahlungssystem nach Anspruch 5, bei dem es die Verarbeitungseinrichtungen ermöglichen, nach direkter Bezahlung durch den Benutzer, die Zone zur Speicherung der Währungseinheiten mindestens bestimmter namenloser Karten nachzuladen.

7. Elektronisches Zahlungssystem nach Anspruch 6, das weiter aufweist:
- einen dritten Kartensatz (10), bei dem es sich um namenlose, vorausbezahlte Karten handelt, von denen jede aufweist:
· einen Speicher (11), der eine Zone (109) zum Speichern einer Beförderungs- oder Dienstleistungseinheit umfaßt, die bei der Inanspruchnahme dieser Beförderung oder dieser Dienstleistung abgebucht wird, sowie eine Zone (107) zum Speichern eines entsprechenden Beförderungsausweises, und
· eingebaute Prozessoreinrichtungen (12, 13) für den selektiven Zugriff und die Verwaltung der in diesem Speicher enthaltenen Informationen.

## Claims

1. An electronic payment system using microcircuit cards to pay for travel and other public services, of the type comprising:
- a first set of cards (20), said cards being named cards and each comprising:
· a memory (21) including:
◇ on the one hand, a zone (505) for personal and banking identification of the cardholder; and
◇ on the other hand, a zone (506) for storing monetary units suitable for being successively deducted each time a transport or other service is paid for directly, and a zone (509, 509') for storing at least one ticket which is invalidated on taking the corresponding trip; and
· incorporated processor means (22) for providing selective access to and for managing the information contained in said memory;
and possibly:
- a second set of cards (10), said cards being prepaid anonymous cards and each comprising:
· a memory (11) including a zone (109) for storing monetary units capable of being successively deducted on each occasion that travel or some other service is paid for directly, and a zone (107) for storing at least one ticket which is invalidated when the corresponding trip is taken; and
· incorporated processor means for providing selective access to and for managing the information contained in said memory; and
- a set of card-reading machines (30) associated with each transport means or service;
said system being characterized in that it allows the payment by a single card for a plurality of transports and services themselves offered by a plurality of networks, and in that it further comprises:
- computer means (40, 50) connected at least to a subset of the set of machines, and serving by way of remote bank deduction and as a function of the contents of the personal and banking identification zones of a named card, to enable transport or other services to be paid for without deducting from the monetary units stored in the named card, and also to reload the zone for storing monetary units and/or to restore the zone for storing tickets in the named card.

2. The electronic payment system of claim 1, in which:
- the cards in both sets of cards further include a network-identifying zone (102; 504) representative of that one of the networks which issued the card to the holder and which received funds from the holder corresponding to the prepayment of the monetary units and to which any fluids paid for possible reloading of the monetary units will be directed; and
- the computer means include inter-network compensation means implemented whenever the network to be paid for transport or other service is not the same as the network identified in the network identification zone of the card used for said payment.

3. The electronic payment system of claim 2, in which the internetwork compensation means are also implemented whenever the network reloading a card does not correspond to the network identified in the network identification zone of the card being reloaded.

4. The electronic payment system of claim 1, in which the memory of named cards includes at least one fare identification zone (508, 508') for the cardholder, thereby enabling different rates to be charged for transport and other services.

5. The electronic payment system of claim 1, in which the computer means enable a fare rebate to be calculated as a function of an audit trail (510, 510') stored in the card and relating to transport or other services paid for by a given user using a named card.

6. The electronic payment system of claim 1, in which the computer means serve, after direct payment by a user, to reload the zone for storing monetary units in at least some of the anonymous cards.

7. The electronic payment system of claim 1, further comprising:
- a third set of cards (10), said cards being prepaid anonymous cards and each including:
· a memory (11) comprising a zone (109) for memorizing a transport or other service unit deducted during use of said transport or other service, and a zone (107) for storing the corresponding ticket; and
· incorporated processor means (12, 13) for providing selective access to and for managing the information contained in said memory.
